# EUROPÄISCHE PATENTSCHRIFT

(11) **EP 3 672 787 B1**
(45) Veröffentlichungstag und Bekanntmachung des Hinweises auf die Patenterteilung: **07.05.2025**
(21) Anmeldenummer: 18752752.8
(22) Anmeldetag: 09.08.2018
(51) Int. Cl.: B29C 70/30, B32B 7/12, B29C 64/106, B29C 64/194, B33Y 10/00, B33Y 80/00

(54) **VERFAHREN ZUM HERSTELLEN EINES FORMBAUTEILS, SOWIE FORMBAUTEIL HERGESTELLT MIT EINEM DERARTIGEN VERFAHREN**
METHOD FOR PRODUCING A SHAPED COMPONENT, AND SHAPED COMPONENT PRODUCED BY MEANS OF SUCH A METHOD
PROCÉDÉ DE FABRICATION D'UNE PIÈCE FAÇONNÉE ET PIÈCE FAÇONNÉE FABRIQUÉE PAR UN PROCÉDÉ DE CE TYPE

(30) Priorität: 22.08.2017 DE 102017214578
(43) Veröffentlichungstag der Anmeldung: 01.07.2020
(73) Patentinhaber: Robert Bosch GmbH, 70442 Stuttgart (DE)
(72) Erfinder: WAHL, Ruben, 71394 Kernen (DE); FISCHER, Alexander, 74199 Untergruppenbach (DE)
(86) Internationale Anmeldenummer: PCT/EP2018/071572
(87) Internationale Veröffentlichungsnummer: WO 2019/038094

(56) Entgegenhaltungen:
- WO-A1-2012/136235
- WO-A1-2015/139095
- WO-A1-2018/057738
- CN-A- 106 891 524
- US-A1- 2002 053 257
- US-A1- 2017 151 719
- US-B2- 9 457 521

## Beschreibung

### Stand der Technik

Die Erfindung betrifft ein Verfahren zum Herstellen eines Formbauteils nach dem Oberbegriff des Anspruchs 1. Ferner betrifft die Erfindung ein Formbauteil, welches durch ein derartiges Verfahren hergestellt ist.

D1 WO 2015/139095 A1 offenbart ein Verfahren und eine Vorrichtung zur Herstellung eines Verbundobjekts aus einem ersten und einem zweiten Material.

D3 CN 106 891 524 beschreibt ein 3D-Druckverfahren und eine -Vorrichtung für ein gezieltes Zusammenfügen kurze Fasern in einer flüssigen Matrix.

D7 US 9 457 521 B2 beschreibt ein Verfahren, eine Vorrichtung und eine Materialmischung für die direkte digitale Herstellung von faserverstärkten Teilen.

Bei einem bekannten gattungsbildenden 3D-Druckverfahren wird ein Formbauteil hergestellt, indem ein Ausgangsmaterial im Druckverfahren in einer Abfolge von Schichten jeweils übereinander angeordnet wird. Sämtliche Schichten bilden dann das Formbauteil aus. Dies wird erreicht, indem Ausgangsmaterialien verwendet werden, die beim Drucken bei einer Drucktemperatur in flüssiger oder wenigstens zähflüssiger Form vorliegen und dann nach dem Ausbilden der Schicht auf eine Umgebungstemperatur abkühlen, wobei die

Ausgangsmaterialien den Aggregatzustand ändern und aushärten. Dies ermöglicht das schichtweise Herstellen eines Formbauteils. Nachteilig bei derartig ausgebildeten Formbauteilen ist, dass sich die mechanischen Eigenschaften, wie etwa die Festigkeit des hergestellten Formbauteils, lediglich durch die Wahl des Ausgangsmaterials beeinflussen lassen. Bei gattungsbildenden 3D-Druckverfahren werden üblicherweise thermoplastische Kunststoffe, wie etwa Acrylnitril-Butadien-Styrol (ABS), Polylactide (PLA), Acrylate, Epoxyde oder Polyurethane als Ausgangsmaterial verwendet. Allerdings wird die Materialauswahl allein schon durch die thermischen Anforderungen des Druckverfahrens deutlich eingegrenzt, weshalb Ausgangsmaterialien, die im ausgehärteten Zustand eine hohe Festigkeit aufweisen, sehr selten sind.

### Offenbarung der Erfindung

Das erfindungsgemäße Verfahren zum Herstellen eines Formbauteils mit den Merkmalen des Anspruchs 1 hat den Vorteil, dass die Festigkeit des Formbauteils besonders hoch ist. Insbesondere ermöglicht dies den Aufbau von Formbauteilen mit filigranen Strukturen über ein klassisches 3D-Druckverfahren, wobei das Formbauteil dennoch eine hohe Festigkeit und insbesondere damit eine gute mechanische Belastbarkeit besitzt.

Das erfindungsgemäße Herstellungsverfahren umfasst hierfür wenigstens eine weitere Schicht, die zumindest bereichsweise aus einem Sprühverfahren unter Verwendung von Faserstücken erzeugt wird. Durch die Faserstücke können die mechanischen Eigenschaften des Formbauteils verbessert werden. Erreicht wird dies, da die auf das Formbauteil einwirkenden Kräfte durch die in der weiteren Schicht enthaltenen einzelnen Faserstücke besser absorbiert werden können. Bevorzugt ist eine durch das Sprühverfahren erzeugte weitere Schicht im Formbauteil vorgesehen. Allerdings können auch mehrere jeweils eine Vielzahl von Faserstücken aufweisenden Schichten, die durch das Sprühverfahren hergestellt wurden, im Formbauteil ausgebildet werden, die dann gemeinsam für eine bessere mechanische Belastbarkeit des Formbauteils sorgen. Alternativ ist es aber auch gerade bei einem 3D-Druckverfahren, welches auf der so genannten Multi Jet Modeling (MJM)-Technologie basiert, möglich, dass die weitere Schicht in eine Außenschicht eingebracht wird. Dies ermöglicht erfindungsgemäß die Vorteile des klassischen 3D-Druckverfahrens zu nutzen und Formbauteile, insbesondere Prototypen, in kurzer Zeit herzustellen, wobei die mechanischen Eigenschaften durch das Einbringen der wenigstens einen weiteren Schicht durch das Sprühverfahren in das aus vielen Schichten aufgebaute Formbauteil verbessert werden können und insbesondere die Festigkeit des Formbauteils bei einer mechanischen Belastung verbessert werden kann.

Die durch das Sprühverfahren erzeugte weitere Schicht weist Faserstücke aus Glas oder Aramid auf, die eine Länge von ungefähr 50mm besitzen. Dies ermöglicht das Ausbilden von mittels des Sprühverfahrens erzeugten weiteren Schichten in dem Formbauteil, die das Eigengewicht (Masse) des Formbauteils nur unwesentlich steigern und dennoch einen großen Beitrag zur Verbesserung der mechanischen Eigenschaften, insbesondere der Festigkeit des Formbauteils, liefern. Neben kurzen Herstellungszeiten aufgrund des 3D-Druckverfahrens erlaubt dies zudem vorteilhaft die Herstellungskosten im Vergleich zu rein aus Carbon gefertigten Formbauteilen deutlich zu reduzieren.

Vorteilhafte Weiterbildungen des erfindungsgemäßen Herstellungsverfahrens sind in den Unteransprüchen aufgeführt.

In einer Fortbildung der Erfindung erfolgt die Anordnung der in der weiteren Schicht enthaltenen Faserstücke orientiert. Mit anderen Worten ausgedrückt bedeutet dies, dass sämtliche Faserstücke in einer mit dem Sprühverfahren erzeugten Schicht geordnet ausgerichtet sind, wobei die Längsrichtungen der Faserstücke vorzugsweise parallel und/oder nahezu parallel zueinander angeordnet sind. Dies ermöglicht die Festigkeit des Formbauteils im Vergleich zu einer anisotropen, also ungeordneten Anordnung der Faserstücke in der wenigstens einen weiteren Schicht zu steigern. Dies wird bevorzugt ermöglicht, indem die Faserstücke in dem Sprühverfahren durch eine Düse zum Ausbilden der weiteren Schicht derart auf das Formbauteil aufgebracht werden, dass sämtliche Faserstücke die gleiche Orientierung aufweisen. Alternativ ist jedoch auch eine anisotrope, also beliebige Anordnung der Faserstücke in der weiteren Schicht möglich. Dies erlaubt die mechanischen Eigenschaften des
Formbauteils, insbesondere die mechanische Festigkeit, gezielt an den Anwendungsfall anzupassen. Ferner ist es auch möglich, dass das
Formbauteil mehrere im Sprühverfahren erzeugte weitere Schichten umfasst, wobei in sämtlichen weiteren Schichten die Faserstücke in unterschiedlichen Richtungen, also anisotrop, angeordnet sein können.

Weiterbildend ist vorgesehen, dass in dem Sprühverfahren neben den Faserstücken auch ein Bindemittel für die Faserstücke in die weitere Schicht eingebracht wird. Dies ermöglicht die mechanischen Eigenschaften der weiteren Schicht zu verbessern, da durch das Bindemittel die Faserstücke umfassende weitere Schicht wesentlich robuster ausgebildet wird. Damit wird das Formbauteil bzw. die Faserstücke umfassende weitere Schicht bei unmittelbarer Kraftbeaufschlagung stabiler. Bevorzugt wird die Festigkeit der weiteren Schicht aber auch bei hohen Temperaturen oder in einer aggressiven Umgebungsatmosphäre, wie beispielsweise salzhaltiger Meeresluft, durch das Bindemittel gesteigert. Ferner spart das direkte Einbringen des Bindemittels im Sprühverfahren einen weiteren Verfahrensschritt ein, bei welchem ein derartiges Bindemittel auf die Fasern aufgebacht wird. Bevorzugt werden die Bindemittel durch härtende Kunstharze, wie etwa Epoxidharze und/oder Reaktionsharze ausgebildet. Zum Aushärten der Kunstharze kann eine thermische Behandlung der weiteren Schicht vorgesehen sein (Tempern). Alternativ ist auch eine Bestrahlung der Schicht mittels UV-Strahlen möglich, die zum Aushärten des Bindemittels führt. Ergänzend kann das Bindemittel auch Mikroballons als Füllstoff enthalten, die dann auch zu einer Verbesserung der mechanischen Eigenschaften bzw. zu einer Verringerung des Gewichts führen können. Weiter bevorzugt ist zudem auch, wenn in einem letzten Prozessschritt sämtliche Schichten nach dem Einbringen der weiteren Schicht zum Aushärten gemeinsam thermisch behandelt werden.

Eine bevorzugte Ausbildung des erfindungsgemäßen Herstellungsverfahrens sieht vor, dass sich die Faserstücke teilweise überlappen, wodurch die mechanischen Eigenschaften und insbesondere auch die Festigkeit des Formbauteils gesteigert werden kann. Dabei werden die Faserstücke zur Ausbildung der weiteren Schicht derart aufgesprüht, dass sich Teilbereiche der Faserstücke überlagern, die dann durch die Bindemittel fest miteinander verbunden und fixiert werden.

Weiterbildend ist vorgesehen, dass die Formbauteile Außenschichten aufweisen, die ausschließlich im Druckverfahren erzeugt werden. Dies ermöglicht Formbauteile mit filigranen Außenstrukturen zu fertigen, die dennoch durch das Anordnen einer die Faserstücke aufweisenden weiteren Schicht im Innenbereich über verbesserte mechanische Eigenschaften verfügt. Damit können sämtliche im klassischen 3D- Druckverfahren erzeugte Bauteile auch mit dem erfindungsgemäßen Verfahren hergestellt werden, wobei vorteilhaft bei dem erfindungsgemäßen Herstellungsverfahren durch das Anordnen der Faserstücke aufweisenden weiteren Schicht im Innenbereich die mechanischen Eigenschaften des gesamten Formbauteils gezielt verbessert und/oder angepasst werden können.

In einer Fortbildung dieser Erfindung umfasst das Formbauteil wenigstens zwei weitere Schichten, die zumindest bereichsweise im Sprühverfahren erzeugt werden. Dies ermöglicht es, dass die mechanischen Eigenschaften, insbesondere die Festigkeit, über wenigstens zwei Faserstücke aufweisende weitere Schichten verbessert wird, wobei die mechanischen Eigenschaften, insbesondere die Festigkeit durch wenigstens zwei weitere Schichten im Vergleich zu nur einer weiteren Schicht nochmals gesteigert werden kann. Bevorzugt ist es dabei auch möglich, die Faserstücke in den beiden weiteren Schichten unterschiedlich auszurichten, wodurch die mechanischen Eigenschaften des Formbauteils gezielt in Bezug auf richtungsabhängige Kräfte angepasst werden können.

Weiterbildend ist dabei auch vorgesehen, dass zwei, mit dem Sprühverfahren erzeugte weitere Schichten des Formbauteils unmittelbar übereinander angeordnet werden. Dies ermöglicht die Dicke der mit dem Sprühverfahren erzeugten weiteren Schichten zu beeinflussen, wobei auch je nach Anwendungsfall die mechanischen Eigenschaften des Formbauteils beeinflusst werden können.

Alternativ dazu ist es auch weiterbildend vorgesehen, dass im Formbauteil wenigstens zwei weitere Schichten angeordnet werden, wobei zwischen den wenigstens zwei weiteren Schichten wenigstens eine im Druckverfahren erzeugte Schicht angeordnet wird. Auch dies ermöglicht je nach Anwendungsfall die mechanischen Eigenschaften des Formbauteils gezielt zu steigern und damit anwendungsabhängig zu individualisieren.

Ferner zeigt eine Fortbildung der Erfindung einen Verfahrensschritt, bei welchem die wenigstens eine im Sprühverfahren erzeugte weitere Schicht durch eine, insbesondere thermische Nachbehandlung zur Festigkeitssteigerung unterzogen wird. Dabei kann sowohl eine rein thermische Behandlung vorgesehen sein, bei der das Formbauteil bzw. die Faserstücke umfassende weitere Schicht auf eine bestimmte Temperatur gebracht wird, bei der ein Aushärteprozess, insbesondere aufgrund des Bindemittels, aktiviert wird. Alternativ und/oder ergänzend ist zur Aushärtung auch eine Bestrahlung des Formbauteils und/oder der die Faserstücke umfassenden weiteren Schicht möglich, wobei bevorzugt UV-Strahlung eingesetzt wird.

Schließlich umfasst die Erfindung auch ein Formbauteil, das nach einem erfindungsgemäßen Verfahren hergestellt ist, wobei das Formbauteil ein Gehäuseteil ist, das insbesondere im KFZ-Bereich eingesetzt wird.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine seitliche Ansicht eines schematisch gezeigten Formbauteils, welches mit einem 3D-Druckverfahren hergestellt wurde und eine mit einem Sprühverfahren erzeugte, Faserstücke umfassende weitere Schicht aufweist,
- Fig. 2: eine Ansicht durch das aus Fig. 1 bekannte Formbauteil in Richtung II-II der Fig. 1, sowie in
- Fig. 3: eine schematische Darstellung einer Faserstücke aufweisenden weiteren Schicht, die mit dem Sprühverfahren erzeugt wurde.

In den Figuren sind funktionsgleiche oder zueinander äquivalente Elemente und Baugruppen mit den gleichen Bezugszeichen gekennzeichnet.

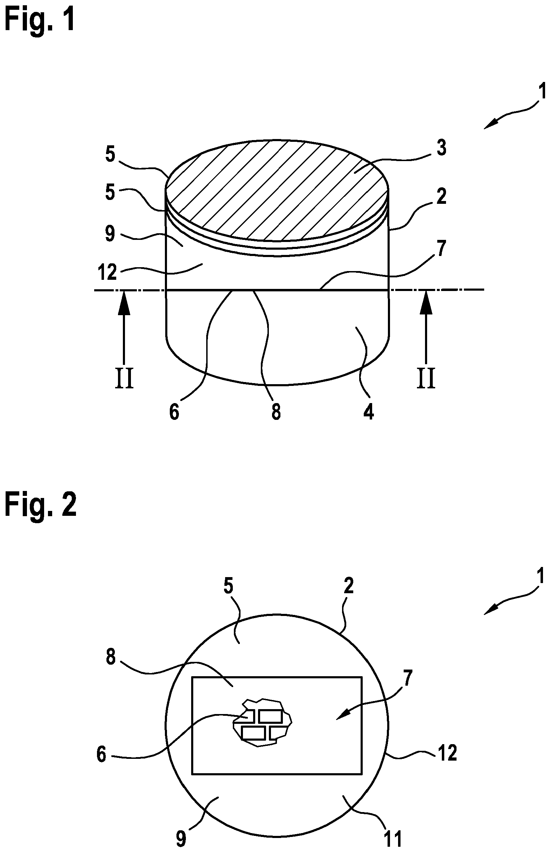

Die Fig. 1 zeigt eine seitliche Ansicht eines schematisch gezeigten Formbauteils 1, welches mit einem erfindungsgemäßen 3D-Druckverfahren aus einem Ausgangsmaterial 9 hergestellt wurde. Bei dem Ausgangsmaterial 9 handelt es sich um einen thermoplastischen Kunststoff, wie etwa ABS, PLA, Polyurethan, Epoxyd, Acrylat, Polycarbonat oder Ultem. Das Formbauteil 1 besitzt eine zylindrische Außenkontur 2 mit einer kreisförmigen Grundfläche 3 sowie einer entsprechenden Mantelfläche 4. Sämtliche Außenflächen des Formbauteils 1 wurden mittels eines klassischen 3D-Druckverfahrens hergestellt. Dazu wird zunächst ein geometrisches Modell des Formbauteils 1 erstellt, aus dem dann einzelne Schichten 5 ermittelt werden, die sich mittels des 3D-Druckverfahrens aus dem Ausgangsmaterial 9 herstellen lassen. Dazu wird bei dem 3D-Druckvorgang das Ausgangsmaterial 9 zunächst auf eine Temperatur erwärmt, bei der der Aggregatzustand des Ausgangsmaterials 9 flüssig, insbesondere zähflüssig, ist. Anschließend erfolgt der Druckvorgang, bei welchem das vorgewärmte Ausgangsmaterial 9 gedruckt wird und somit eine Schicht 5 ausbildet. Da die Temperatur des Ausgangsmaterials 9 nach dem Drucken auf die Umgebungstemperatur abfällt, härtet das Ausgangsmaterial 9 aus. Dies ermöglicht das schichtweise Ausbilden des Formbauteils 1.

Zur Steigerung der Festigkeit des Formbauteils 1 wird nun erfindungsgemäß eine weitere Schicht 7 im Formbauteil 1 durch ein Sprühverfahren erzeugt. Dabei werden in Fig. 1 nicht im Detail dargestellte Faserstücke 6 in der weiteren Schicht 7 derart angeordnet, dass alle Faserstücke 6 der weiteren Schicht 7 in die gleiche Richtung ausgerichtet werden und sich teilweise gegenseitig überlappen. Bei dem Sprühverfahren wird auch ein Bindemittel 8 aufgesprüht, das dafür sorgt, dass die Faserstücke 6 in der aufgesprühten, gerichteten Position gehalten bzw. fixiert werden. Durch die im Innenbereich des Formbauteils 1 vorgesehene und mittels des Sprühverfahrens erzeugte weitere Schicht 7 können die mechanischen Eigenschaften des Formbauteils 1 wesentlich gesteigert werden, was dazu führt, dass das Formbauteil 1 eine höhere Festigkeit besitzt.

Fig. 2 zeigt eine Ansicht durch das aus Fig. 1 bekannte Formbauteil 1, wobei nun die im Formbauteil 1 durch das Sprühverfahren hergestellte weitere Schicht 7 sichtbar ist. Die weitere Schicht 7 wird außerhalb des Bereichs der Faserstücke 6 durch das Ausgangsmaterial 9 gebildet, das durch das klassische 3D-Druckverfahren erzeugt wurde. Dies ermöglicht es, durch das erfindungsgemäße Herstellungsverfahren Formbauteile 1 aufzubauen, deren Außenkontur 2 homogen durch das Ausgangsmaterial 9 gebildet ist, wobei die Formbauteile 1 durch das Vorsehen der weiteren Schicht 7 im Innenbereich verbesserte mechanische Eigenschaften aufweisen, und wobei insbesondere die Steifigkeit durch die nicht in Fig. 2 im Detail gezeigten und durch das Bindemittel 8 miteinander fixierten Faserstücke 6 in der weiteren Schicht 7 verbessert wird. Damit lassen sich sämtliche mittels 3D- Druckverfahren herstellbare Formbauteile 1 fertigen, die erfindungsgemäß durch die wenigstens eine weitere Schicht 7 im Vergleich zu nur im 3D-Druckverfahren hergestellten Formbauteilen verbesserte mechanische Eigenschaften aufweisen.

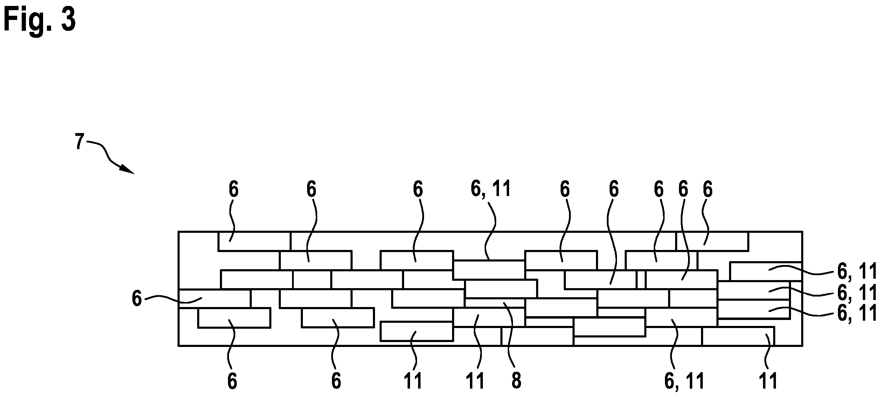

Fig. 3 zeigt eine schematische Darstellung der mittels des Sprühverfahrens erzeugten weiteren Schicht 7. Darin sind die einzelnen Faserstücke 6 zu erkennen, wobei sämtliche Faserstücke 6 zueinander geordnet ausgerichtet sind und in dieser geordneten Relativanordnung über das die Faserstücke 6 überdeckendes oder tränkendes Bindemittel 8 fixiert werden. Die Faserstücke 6 besitzen eine Länge von etwa 50mm und bestehen aus Aramid 11, was zu einer besonders hohen Festigkeit des Formbauteils 1 führt.

Ergänzend wird erläutert, dass zusätzlich zu den dargestellten Ausführungsformen das die wenigstens eine weitere Schicht aufweisende Formbauteil neben einem 3D-Druckverfahren basierend auf dem Schmelzschichten auch durch ein anderes 3D-Druckverfahren, wie etwa der Stereolithografie (SLA)-Technologie, dem selektiven Lasersintern (SLS) oder dem Multi Jet Modeling (MJM), gebildet sein kann.

## Patentansprüche

1. Verfahren zum Herstellen eines Formbauteils (1), wobei das Formbauteil (1) aus mehreren übereinander angeordneten Schichten (5, 7) hergestellt wird, und wobei wenigstens eine Schicht (5) zumindest bereichsweise im Druckverfahren aus einem Ausgangsmaterial (9) erzeugt wird,
**dadurch gekennzeichnet,**
**dass** wenigstens eine weitere Schicht (7) zumindest bereichsweise im Sprühverfahren unter Verwendung von Faserstücken (6) erzeugt wird, wobei in dem Sprühverfahren Faserstücke (6) aus Glas oder Aramid (11) mit einer Länge von ungefähr 50mm verwendet werden.

2. Verfahren nach Anspruch 1,
**dadurch gekennzeichnet,**
**dass** in dem Sprühverfahren die Faserstücke (6) orientiert angeordnet werden.

3. Verfahren nach Anspruch 1 oder 2,
**dadurch gekennzeichnet,**
**dass** in dem Sprühverfahren gleichzeitig mit den Faserstücken (6) Bindemittel (8) für die Faserstücke (6) eingebracht werden.

4. Verfahren nach Anspruch 1 bis 3,
**dadurch gekennzeichnet,**
**dass** die Faserstücke (6) teilweise überlagernd eingebracht werden.

5. Verfahren nach Anspruch 1 bis 4,
**dadurch gekennzeichnet,**
**dass** die Formbauteile (1) Außenschichten (12) aufweisen, die ausschließlich im Druckverfahren erzeugt werden.

6. Verfahren nach Anspruch 1 bis 5,
**dadurch gekennzeichnet,**
**dass** in dem Formbauteil (1) wenigstens zwei weitere Schichten (7) eingebracht werden, die zumindest bereichsweise durch das Sprühverfahren erzeugt werden.

7. Verfahren nach Anspruch 6,
**dadurch gekennzeichnet,**
**dass** die wenigstens zwei weiteren Schichten (7) unmittelbar übereinander angeordnet werden.

8. Verfahren nach Anspruch 6,
**dadurch gekennzeichnet,**
**dass** die wenigstens zwei weiteren Schichten (7) durch wenigstens eine im Druckverfahren erzeugte Schicht (5) getrennt angeordnet werden.

9. Verfahren nach Anspruch 1 bis 8,
**dadurch gekennzeichnet,**
**dass** die im Sprühverfahren erzeugte weitere Schicht (7) einer insbesondere thermischen Nachbehandlung zur Festigkeitssteigerung unterzogen wird.

10. Formbauteil (1), hergestellt nach einem der Ansprüche 1 - 9,
wobei das Formbauteil (1) ein Gehäuseteil (13), insbesondere für KFZ-Anwendungen ist.

## Claims

1. Method for producing a shaped component (1), wherein the shaped component (1) is produced from multiple layers (5, 7) arranged one on top of the other, and wherein at least one layer (5) is produced at least in some regions from a starting material (9) by means of a printing process,
**characterized**
**in that** at least one further layer (7) is produced at least in some regions by means of a spraying process using fibre pieces (6), wherein fibre pieces (6) of glass or aramid (11) with a length of approximately 50 mm are used in the spraying process.

2. Method according to Claim 1,
**characterized**
**in that** in the spraying process the fibre pieces (6) are arranged in an oriented manner.

3. Method according to Claim 1 or 2,
**characterized**
**in that** in the spraying process binders (8) for the fibre pieces (6) are introduced at the same time as the fibre pieces (6).

4. Method according to Claims 1 to 3,
**characterized**
**in that** the fibre pieces (6) are introduced partially one over the other.

5. Method according to Claims 1 to 4,
**characterized**
**in that** the shaped components (1) have outer layers (12) that are created exclusively by means of the printing process.

6. Method according to Claims 1 to 5,
**characterized**
**in that** the moulded component (1) incorporates at least two further layers (7) that are created at least in some regions by means of the spraying process.

7. Method according to Claim 6,
**characterized**
**in that** the at least two further layers (7) are arranged directly one on top of the other.

8. Method according to Claim 6,
**characterized**
**in that** the at least two further layers (7) are arranged such that they are separated by at least one layer (5) created by means of the printing process.

9. Method according to Claims 1 to 8,
**characterized**
**in that** the further layer (7) created by means of the spraying process is subjected to a subsequent treatment, in particular thermal treatment, to increase the strength.

10. Shaped component (1), produced according to one of Claims 1-9,
wherein the shaped component (1) is a housing part (13), in particular for automotive applications.

## Revendications

1. Procédé de fabrication d'une pièce façonnée (1), la pièce façonnée (1) étant fabriquée à partir de plusieurs couches (5, 7) superposées, et au moins une couche (5) étant produite, au moins par zones, par un procédé d'impression à partir d'un matériau de base (9),
**caractérisé**
**en ce qu'**au moins une autre couche (7) est produite au moins par endroits par procédé de pulvérisation en utilisant des morceaux de fibres (6), des morceaux de fibres (6) en verre ou en aramide (11) d'une longueur d'environ 50mm étant utilisés dans le procédé de pulvérisation.

2. Procédé selon la revendication 1,
**caractérisé**
**en ce que**, dans le procédé de pulvérisation, les morceaux de fibres (6) sont orientés.

3. Procédé selon la revendication 1 ou la revendication 2,
**caractérisé**
**en ce que**, dans le procédé de pulvérisation, des liants (8) pour les morceaux de fibres (6) sont mis en place en même temps que les morceaux de fibres (6).

4. Procédé selon une revendication 1 à 3,
**caractérisé**
**en ce que** les morceaux de fibres (6) sont mis en place en se chevauchant partiellement.

5. Procédé selon une revendication 1 à 4,
**caractérisé**
**en ce que** les pièces façonnées (1) présentent des couches extérieures (12) qui sont exclusivement produites par un procédé d'impression.

6. Procédé selon une revendication 1 à 5,
**caractérisé**
**en ce que**, dans la pièce façonnée (1), sont mises en place au moins deux couches supplémentaires (7) qui sont produites au moins par zones par le procédé de pulvérisation.

7. Procédé selon la revendication 6,
**caractérisé**
**en ce que** lesdites au moins deux couches supplémentaires (7) sont agencées directement l'une au-dessus de l'autre.

8. Procédé selon la revendication 6,
**caractérisé**
**en ce que** lesdites au moins deux couches supplémentaires (7) sont aménagées de manière à être séparées par au moins une couche (5) produite par un procédé d'impression.

9. Procédé selon une revendication 1 à 8,
**caractérisé**
**en ce que** la couche supplémentaire (7) produite lors du processus de pulvérisation est soumise à un traitement ultérieur, notamment thermique, pour augmenter sa résistance.

10. Pièce façonnée (1) fabriquée selon l'une des revendications 1 à 9,
la pièce façonnée (1) étant une partie de carter (13), en particulier pour des applications automobiles.
